# EUROPÄISCHE PATENTSCHRIFT

(11) **EP 1 670 608 B1**
(45) Veröffentlichungstag und Bekanntmachung des Hinweises auf die Patenterteilung: **12.09.2007**
(21) Anmeldenummer: 04786860.9
(22) Anmeldetag: 24.09.2004
(51) Int. Cl.: B23B 27/14

(54) **SCHNEIDEINSATZ**
CUTTING ELEMENT
INSERT DE COUPE

(30) Priorität: 08.10.2003 DE 10346790
(43) Veröffentlichungstag der Anmeldung: 21.06.2006
(73) Patentinhaber: Kennametal Widia Produktions GmbH & Co. KG, 45145 Essen (DE)
(72) Erfinder: WÜRFELS, Andreas, 50678 Köln (DE); RUTHER, Günter, 45768 Marl (DE)
(74) Vertreter: Vomberg, Friedhelm
(86) Internationale Anmeldenummer: PCT/DE2004/002144
(87) Internationale Veröffentlichungsnummer: WO 2005/039806

(56) Entgegenhaltungen:
- SE-C2- 514 014
- US-A- 4 411 565
- PATENT ABSTRACTS OF JAPAN Bd. 009, Nr. 063 (M-365), 20. März 1985 (1985-03-20) & JP 59 196107 A (NIHON YAKIN:KK), 7. November 1984 (1984-11-07)

## Beschreibung

Die Erfindung betrifft einen Schneideinsatz für die zerspanende Bearbeitung von metallischen Werkstücken, insbesondere von Radsätzen, mit einer oberen und einer unteren Fläche, von denen mindestens eine, vorzugsweise beide als Spanflächen ausgebildet sind, und mit einer die obere und die untere Fläche verbindenden, hierzu jeweils senkrecht stehenden Seitenfläche, die zusammen mit der Spanfläche zur Zerspanung nutzbare Schneidkanten bildet, die jeweils parallel zueinander angeordnete längere lineare Schneidkantenabschnitte und jeweils zueinander liegende kurze lineare Schneidkantenabschnitte sowie jeweils benachbart liegende längere und kurze Schneidkantenabschnitte verbindende Schneidecken besitzen.

Eine Schneideinsatz dieser Art ist z.B. aus dem Dokument US-A-5 123 768 bekannt.

Solche Schneideinsätze entsprechen der DIN-Norm 4987LNUX. Der Vorteil solcher Schneideinsätze liegt darin, dass diese aufgrund der vorhandenen längeren Schneidkanten und der kürzeren Scheidkanten, von denen benachbarte durch eine Schneidecke miteinander verbunden sind, für kombinierte Längs-Querdreharbeiten verwendet werden können. Allerdings ist die Spanbildung bei den nach dem Stand der Technik bekannten Ausführungsformen nicht immer zufrieden stellend, insbesondere entstehen beim Drehen häufig Späne mit zu geringen Dicken, die den Nachteil haben, dass die Späne schlecht brechen, was im Extremfall zu einer gefährlichen Wirrspanbildung führen kann. Zwar kann durch den Werkzeugvorschub in gewissen Grenzen die Spandicke vergrößert werden, jedoch erhöhen sich hierdurch die an der Schneidkante wirkenden Zerspanungskräfte, was zu einem unerwünschten frühzeitigen Verschleiß der Schneidkante bis hin zum Schneidkantenbruch führen kann.

Es ist daher Aufgabe der vorliegenden Erfindung, einen Schneideinsatz zu schaffen, der durch die neue Ausgestaltung sowohl eine hohe Schneidkantenstabilität besitzt als auch Zerspanungsarbeiten mit hinreichender Spandicke, insbesondere bei der Bearbeitung von Radsätzen oder sonstigen Grobzerspanungsarbeiten, zulässt.

Diese Aufgabe wird durch den Schneideinsatz nach Anspruch 1 gelöst. Erfindungsgemäß ist zumindest ein Teilbereich der längeren linearen Schneidkantenabschnitte gegenüber den angrenzenden Kantenabschnitten sowohl um ein Maß (a) abgesenkt als auch um ein Maß (b) eingerückt. Das Maß (a) der Absenkung beträgt 0,01 x H bis 0,2 x H, vorzugsweise 0,02 x H bis 0,1 x H, wobei H die Gesamthöhe des Schneideinsatzes ist, das Maß (b) der Einrückung beträft 0,005 x B bis 0,1 x B, vorzugsweise 0,008 x B bis 0,05 x B, wobei B die Gesamtbreite des Schneideinsatzes ist. Die Absenkung ist in Bezug auf die Schneidkantenebene zu verstehen, gegenüber der der genannte Teilbereich der längeren Schneidkantenabschnitte in der Höhe versetzt angeordnet wird. Für die vorliegende Erfindung ist es wesentlich, dass zumindest ein Teilbereich der längeren linearen Schneidkantenabschnitte sowohl abgesenkt als auch eingerückt ist, d. h. dass sich diese Anordnung durch die Kombination beider genannter Merkmale von nach dem Stand der Technik bekannten Ausführungsformen unterscheidet, die zum Teil jeweils ausschließlich Schneidkantenabsenkungen, etwa durch Eindrückungen, welche die Schneidkante durchbrechen oder Schneidkanten mit unterschiedlich hohen Schneidkantenabschnitte, die durch Übergangsbereiche verbunden sind, offenbaren. Überraschender Weise hat sich herausgestellt, dass die Kombination der Absenkung sowie auch der Einrückung eines Schneidkantenteilbereiches bei Dreharbeiten, bei denen dieser Teilbereich als aktive Schneidkante benutzt wird, einen Span erzeugen lässt, der wesentlich leichter bricht als dies beispielsweise mit einer linearen Schneidkante möglich ist. Insbesondere wird der Span entsprechend der Schneidkantenform der längeren Schneidkante bereits beim Abheben auch im Querschnitt gekrümmt, was den leichteren Spanbruch ermöglicht.

Weitere Ausgestaltungen der Erfindung sind in den Unteransprüchen beschrieben.

So ist vorzugsweise der eingerückte und abgesenkte Teilbereich des Schneidkantenabschnittes - von Übergangsbereichen abgesehen - parallel zu benachbarten Schneidkantenabschnitten angeordnet. An die eingerückten und abgesenkten Schneidkantenabschnitte grenzen als Übergangsbereiche jeweils vorzugsweise unter einem Winkel von 10° bis 90°, vorzugsweise von 40° bis 50°, ansteigende Flankenabschnitte an. Diese Flankenabschnitte dienen zur Ausbildung eines im Querschnitt gekrümmten Spanes.

Vorzugsweise besitzen die Schneidkantenecken einen Eckenradius (R) von 0,05 x B bis 0,5 x B, vorzugsweise von 0,1 x B bis 0,4 x B, wobei B der Gesamtbreite des Schneideinsatzes entspricht.

Nach einer weiteren Ausgestaltung und wie im Prinzip aus dem Stand der Technik bekannt, besitzt der Schneideinsatz vorzugsweise ein auf der Spanfläche gegenüber den durch die Schneidkanten bestimmten Ebenen erhabenes und im Abstand zu den Schneidkanten angeordneten Mittelplateau. Bei Ausführungsformen, in denen sowohl ober- als auch unterseitig Spanflächen vorgesehen sind, dienen die jeweiligen Mittelplateaus als Auflageflächen.

Nach einer weiteren Ausgestaltung der Erfindung weist das Mittelplateau Vorsprünge auf, deren Längsachse in Richtung einer Schneidecke oder eines kurzen und/oder eines längeren Schneidkantenabschnittes weist. Diese Vorsprünge dienen als Spanbrecher, die den ablaufenden Span nach "oben" biegen und hierdurch zum Bruch bringen. Insbesondere den Spanbruch fördernd sind Mittelplateaus, die über abfallende Flanken in die rings um dieses Mittelplateau liegende Spanflächenbereiche übergehen. Diese abfallenden Flanken treten für den ablaufenden Span als Anstiegsflanken zur Spanaufbiegung auf.

Weitere spanformende und spanleitende Maßnahmen werden durch rippenförmige Erhöhungen realisiert, die in der Spanfläche symmetrisch zu einer Schneidecken-Winkelhalbierenden oder in deren Richtung liegend angeordnet sind und deren Höhe geringer ist als die Höhe des Mittelplateaus. Diese rippenförmigen Erhöhungen können unmittelbar bis zu der genannten abfallenden Flanke des Mittelplateaus reichen bzw. sich hieran anschließen oder vor diesem Flankenbereich enden. Die rippenförmigen Erhöhungen enden auf der anderen Seite im Abstand zur Schneidkante oder einer dort vorgesehenen Phase.

Vom Mittelplateau können nach einer weiteren Ausführungsform der Erfindung auch weitere Vorsprünge ausgehen, die in Richtung der längeren Schneidkantenabschnitte weisen und/oder eine geringere Höhe als das Mittelplateau haben. Vorzugsweise gehen diese weiteren Vorsprünge über abfallende Flanken in die umliegenden Spanflächenbereiche über und/oder sind ballig, d. h. konvex ausgebildet.

Nach einer weiteren Ausführungsform der Erfindung kann auch der kurze Schneidkantenabschnitt mittig über einen Teilbereich abgesenkt sein, wobei dieser Teilbereich über Anstiegsflanken in die benachbarten Schneidkantenabschnitte übergeht. Die Schneidkante besitzt somit in diesem Bereich lediglich eine Absenkung. Zusätzlich zu den bereits beschriebenen rippenförmigen Erhöhungen können im Abstand zur Schneidkante auch Mulden als spanformende Elemente vorgesehen sein, die insbesondere sichelartig auf der Spanfläche ausgebildet sind.

Alternativ oder zusätzlich zu den rippenförmigen Spanformelementen können auch im Querschnitt trapezförmige Spanformelemente mit einer mit wachsender Entfernung zur Schneidkante wachsenden Höhe vorgesehen sein, die vorzugsweise bis zum Mittelplateau reichen. Diese erhabenen Spanformelemente erstrecken sich keilförmig in Richtung der Schneidkante und stellen eine Art "Auflauframpe" für den ablaufenden Span dar, durch die der Span eine gewisse Vorkrümmung erhält, bevor er auf die Anstiegsrampen des Mittelplateaus trifft.

Nach einer weiteren Ausgestaltung der Erfindung sind die Schneideinsätze in Bezug auf eine Längsmittelachse und/oder eine Quermittelachse und/oder eine Diagonale spiegelsymmetrisch ausgebildet, so dass jede Spanfläche für Links- wie für Rechtsdreharbeiten bzw. als Wendeschneidplatte (durch 180°-Drehung des Schneideinsatzes) verwendbar ist. Werden zusätzlich die obere und untere Fläche jeweils als Spanfläche ausgebildet, so ergibt sich in Bezug auf eine Längsmittelebene eine weitere Spiegelsymmetrie bzw. ein Schneideinsatz, der zwei nutzbare Spanflächen mit jeweiligen Paaren von längeren und kürzeren Schneidkantenabschnitten besitzt.

Weitere Vorteile und Ausführungsbeispiele der Erfindung werden anhand der Zeichnungen erläutert. Es zeigen.
- Fig. 1: eine Prinzipdarstellung eines nach dem Stand der Technik bekannten Schneideinsatzes nebst abgesenktem Schneidkantenbereich beim Drehen eines Radsatzprofils,
- Fig. 2: eine Draufsicht auf einen Schneideinsatz mit einem eingerückten, aber nicht abgesenkten Schneidkantenbereich,
- Fig. 3: einen Schneideinsatz gemäß der vorliegenden Erfindung, der einen eingerückten und abgesenkten Schneidkantenbereich aufweist und
- Fig. 4: eine Stirnansicht dieses Schneideinsatzes auf die abgesenkte und eingerückte Schneidkante.

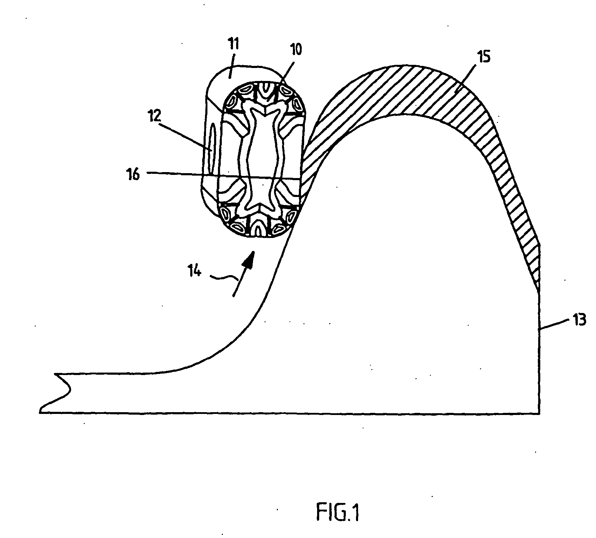

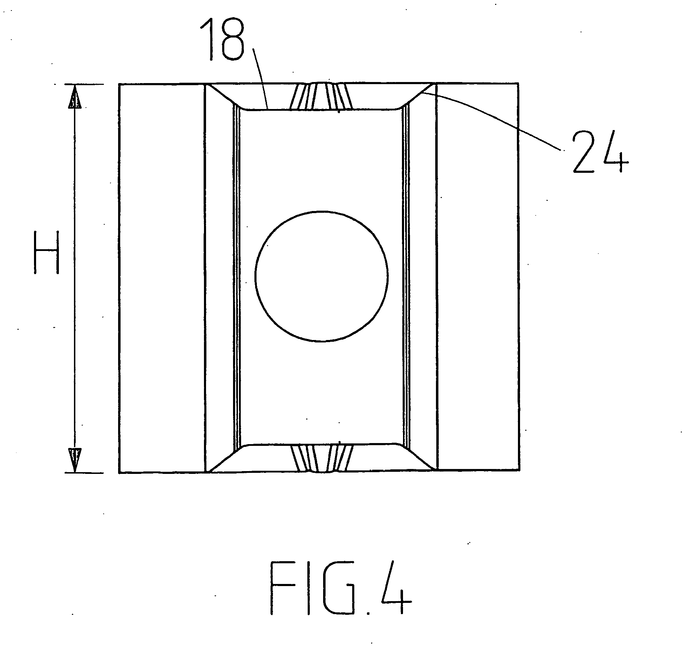

Wie aus Fig. 1 bis 4 ersichtlich, besitzen die dargestellten Schneideinsätze mindestens eine Spanfläche 10, vorzugsweise zwei parallel zueinander geordnete und im Abstand auf gegenüberliegenden Seiten liegende Spanflächen 10, wobei diese beiden Spanflächen über eine vertikal hierzu angeordnete Seitenfläche 11 miteinander verbunden sind. Zur Befestigung des Schneideinsatzes ist eine durchgehende Bohrung 12 vorgesehen, welche an gegenüberliegenden Seiten die Seitenfläche 11 durchbricht. Diese Bohrung dient zur Aufnahme eines Spannelements, mittels dessen der Schneideinsatz in einem Werkzeugträger befestigt wird.

Aus Fig. 1 ergibt sich ein Verwendungseinsatz des Schneideinsatzes beim Drehen eines Radsatzes 13, wobei der Schneideinsatz in Richtung des Pfeils 14 geführt wird. Der abzutragende Bereich 15 ist durch Strichlinierung kenntlich gemacht. In dem dargestellten Ausführungsbeispiel ist die längere Schneidkante über einen Teilbereich abgesenkt (aber nicht eingerückt), so dass sich ein in der Draufsicht betrachtet linearer Verlauf des aktiven Schneidkantenabschnittes 16 ergibt. Durch die erfindungsgemäße zusätzliche Einrückung des mittleren Teilbereiches der längeren Schneidkante, auf die später noch eingegangen wird, ergibt sich in Verbindung mit dem Übergangsbereich in der Draufsicht ein demgegenüber abgewinkelter Schneidenverlauf, der in Verbindung mit dem durch die Absenkung bedingten Schneidenverlauf dazu führt, dass der abgehobene Span im Querschnitt in orthogonal zueinander stehenden Richtungen S-förmige Krümmungen erfährt, aufgrund derer der Span leichter brechen kann.

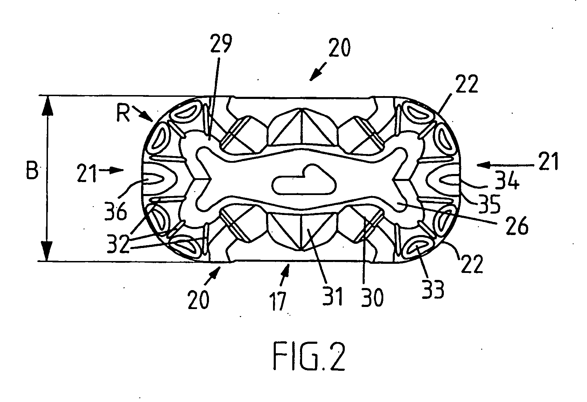

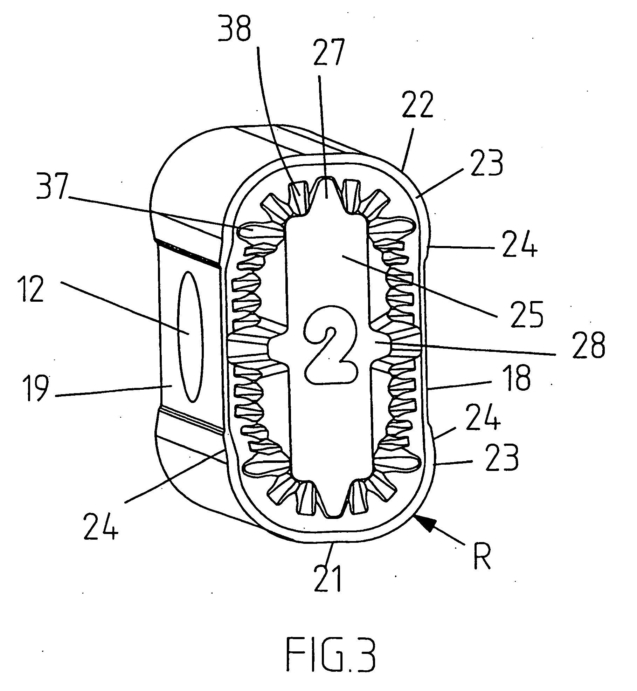

Fig. 2 zeigt in einer Draufsicht einen eingerückten Schneidkantenabschnitt 17, der dadurch geschaffen wird, dass die sich anschließende Freifläche, in diesen Bereich zurückversetzt wird. Wie aus Fig. 3 ersichtlich, werden in einer besonderen Ausführungsform der eingerückte Bereich 17 sowie der abgesenkte Bereich zu einem Schneidkantenabschnitt 18 kombiniert, wobei sich die Bereiche der Schneidkantenabsenkung (in Bezug auf die Spanflächenebene bzw. hierzu liegende Parallelen) sowie die Einrückungen (durch Zurücksetzen der Freiflächen) vollständig überlappen. Die zurückgesetzte Freifläche ist mit Bezugszeichen 19 gekennzeichnet.

Wie aus Fig. 2 bis 4 ersichtlich, besitzt der Schneideinsatz jeweils parallel zueinander liegende längere lineare Schneidkantenabschnitte 20 sowie kürzere lineare Schneidkantenabschnitte 21, die über jeweils benachbarte Schneidkantenabschnitte 20 und 21 verbindende Schneidecken 22 einen länglich ovalen Kantenverlauf in einer Draufsicht ergeben. Ein Teilbereich der längeren Schneidkante 20 ist in Form eines Bereiches 18 sowohl abgesenkt als auch eingerückt. Die jeweiligen Anschlussbereiche 23, die im Ausführungsbeispiel nach Fig. 3 relativ kurz ausgebildet sind, verlaufen parallel zum Schneidkantenabschnitt 18. Jeweils beidseitig schließen sich an die eingerückten wie auch abgesenkten Schneidkantenabschnitte 18 als Übergangsbereiche unter einem Winkel von 10° bis 90°, vorzugsweise von 40° bis 50°, ansteigende Flankenabschnitte 24 an.

Auf der Spanfläche können unterschiedliche erhabene oder muldenförmige Spanformelemente verwendet werden, wie sie grundsätzlich nach dem Stand der Technik bekannt sind. Ebenso empfiehlt es sich, auf gegenüberliegenden Seiten jeweils Spanflächenausbildungen zu wählen, die ein mittleres Plateau 25 besitzen, das beim Wenden des Schneideinsatzes als Auflagefläche in einem Schneidplattensitz dient. Dieses Spanflächenplateau 25 kann die aus Fig. 2 oder 3 dargestellten Ausführungsformen oder anderen Formgebungen erhalten. Insbesondere kann das Plateau Vorsprünge 26 besitzen, deren Längsmittelachse in Richtung einer Schneidecke 22 weist. Alternativ hierzu können auch Vorsprünge 27 und/oder 28 (siehe Fig. 3) verwendet werden, die in Richtung der Schneidkantenmitte eines kurzen bzw. längeren Kantenabschnittes weisen. Diese Vorsprünge können obere abgerundete Kanten oder auch trapezförmige Ausgestaltungen besitzen. Bevorzugt gehen die Vorsprünge oder auch andere Bereiche des Plateaus über abfallenden Flanken 29 (siehe Fig. 2) in die umliegenden Spanflächenbereiche über. Der Flankenwinkel der abfallenden Flanken 29 kann beispielsweise zwischen 45° und 60° (bezogen auf die Schneidplateauebene) gewählt werden. Im Bedarfsfall können auch weitere Vorsprünge 30 oder 31, dort in geringerer Höhe als der Höhe des Spanflächenplateaus, vorgesehen sein. Diese Vorsprünge sowie rippenförmige Erhebungen 32, gegebenenfalls mit sichelförmigen Mulden 33 zwischen zwei rippenförmigen Erhebungen 32 dienen als Spanformelemente. Wie aus Fig. 2 ersichtlich kann die kurze Schneidkante 21 auch einen abgesenkten Bereich 34 mit jeweiligen beidseitigen Anstiegsflanken 35 besitzen. Eine solche Gestaltung wird durch Absenkung eines Bereiches 36 der Spanfläche erreicht, die zu Schneidkanten fernen Bereichen verjüngt ausgebildet ist.

Ebenso und wie am Beispiel des Schneideinsatzes nach Fig. 3 dargestellt, können Spanformelemente 37 oder 38 vorgesehen sein, die im Querschnitt trapezförmig ausgebildet sind und die eine mit wachsenden Abstand von der jeweiligen Schneidkante wachsende Höhe haben, so dass sich eine "Auflauframpe" für den ablaufenden Span in diesem Bereich ergibt. Diese Spanformelemente 37 und 38 enden an den Anstiegsflanken zum mittleren Plateau 25, besitzen jedoch eine geringere Höhe.

Wie in Fig. 3 schematisch dargestellt, können die Randlinien, welche das Plateau 25 begrenzen, teilweise lineare Bereiche, geschwungene Bereich, sowohl konvex als auch konkav ausgebildete oder sonstige Kombinationen aus gekrümmten und/oder linearen Teilstücken aufweisen.

## Patentansprüche

1. Schneideinsatz für die zerspanende Bearbeitung von metallischen Werkstücken, insbesondere von Radsätzen, mit einer oberen und einer unteren Fläche, von denen mindestens eine, vorzugsweise beide als Spanflächen ausgebildet sind, und mit einer die obere und die untere Fläche verbindenden hierzu jeweils senkrecht stehenden Seitenfläche (11), die zusammen mit der Spanfläche zur Zerspanung nutzbare Schneidkanten bildet, die jeweils parallel zueinander angeordnete längere lineare Schneidkantenabschnitte (20) und jeweils parallel zueinander liegende kurze lineare Schneidkantenabschnitte (21) sowie jeweils benachbart liegende längere und kurze Schneidkantenabschnitte verbindende Schneidecken (22) besitzen,
**dadurch gekennzeichnet,**
**dass** zumindest ein Teilbereich (18) der längeren linearen Teilkantenabschnitte gegenüber den angrenzenden Kantenabschnitten (23) um ein Maß (a) abgesenkt als auch um ein Maß (b) eingerückt ist.

2. Schneideinsatz nach Anspruch 1, **dadurch gekennzeichnet, dass** im Verhältnis zur Gesamthöhe (H), und der Gesamtbreite (B) des Schneideinsatzes das Maß (a) der Absenkung 0,01 x H bis 0,2 x H, vorzugsweise 0,02 x H bis 0,1 x H, und das Maß (b) der Einrückung 0,005 x B bis 0,1 x B, vorzugsweise 0,008 x B bis 0,05 x B beträgt.

3. Schneideinsatz nach Anspruch 1, **dadurch gekennzeichnet, dass** der eingerückte und abgesenkte Teilbereich (18) des Schneidkantenabschnittes (20) - von Übergangsbereichen (24) abgesehen - parallel zu benachbarten Schneidkantenabschnitten (23) angeordnet ist.

4. Schneideinsatz nach Anspruch 1 oder 3, **dadurch gekennzeichnet, dass** an die eingerückte und abgesenkte Schneidkantenabschnitte (18) als Übergangsbereich jeweils unter einem Winkel von 10° bis 90°, vorzugsweise von 40° bis 50°, ansteigende Flankenabschnitte (24) angrenzen und/oder dass die Schneidkantenecken einen Eckenradius (R) von 0,05 x B bis 0,5 x B, vorzugsweise von 0,1 x B bis 0,4 x B, wobei B die Gesamtbreite des Schneideinsatzes ist, aufweisen.

5. Schneideinsatz nach einem der Ansprüche 1 bis 4, **gekennzeichnet durch** ein auf der Spanfläche gegenüber den **durch** die Schneidkanten bestimmten Ebenen erhabenes und im Abstand zu den Schneidkanten angeordnetes Mittelplateau (25), das vorzugsweise Vorsprünge (26) aufweist, deren Längsmittelachse in Richtung einer Schneidecke (22) oder eines kurzen und/oder längeren Schneidkantenabschnittes (20, 21) weist.

6. Schneideinsatz nach Anspruch 5, **dadurch gekennzeichnet, dass** das Mittelplateau (25) über abfallende Flanken (29) in die rings um dieses Mittelplateaus liegende Spanflächenbereiche übergeht und/oder **gekennzeichnet durch** rippenförmige Erhöhungen (32), die in der Spanfläche symmetrisch zu einer Schneidecken-Winkelhalbierenden oder in deren Richtung liegt angeordnet sind, deren Höhe geringer ist als die Höhe des Mittelplateaus (25) und die bis an die abfallenden Flanken (29) des Mittelplateaus (25) einerseits aber vor der Schneidkante (20, 21, 22) endend andererseits reichen.

7. Schneideinsatz nach einem der Ansprüche 5 oder 6, **dadurch gekennzeichnet, dass** vom Mittelplateau (25) weitere Vorsprünge (30, 31) ausgehen, die in Richtung der längeren Schneidkantenabschnitte (20) weisen und/oder eine geringere Höhe als das Mittelplateau (25) haben, wobei vorzugsweise die weiteren Vorsprünge (30, 31) über abfallende Flanken in die umliegenden Spanflächenbereiche übergehen und/oder ballig ausgebildet sind.

8. Schneideinsatz nach einem der Ansprüche 1 bis 7, **dadurch gekennzeichnet, dass** der kurze Schneidkantenabschnitt (21) mittig über einen Teilbereich (34) abgesenkt ist und über Anstiegsflanken (35) in die benachbarten Schneidkantenabschnitte übergeht und/oder dass im Abstand zur Schneidkante vorzugsweise zwischen zwei benachbarten rippenförmigen Erhöhungen (32) sichelartig ausgebildete Spanformmulden (33) auf der. Spanfläche vorgesehen sind.

9. Schneideinsatz nach einem der Ansprüche 1 bis 8, **dadurch gekennzeichnet, dass** im Abstand zur Schneidkante im Querschnitt trapezförmige Spanformelemente (37, 38) mit einer mit wachsender Entfernung zur Schneidkante wachsenden Höhe vorgesehen sind, die vorzugsweise bis zum Mittelplateau (25) reicht.

10. Schneideinsatz nach einem der Ansprüche 1 bis 9, **dadurch gekennzeichnet, dass** die Spanflächen in Bezug auf eine Längsmittelachse und/oder eine Quermittelachse und/oder eine Diagonale spiegelsymmetrisch ausgebildet sind und/oder dass die gegenüberliegenden Spanflächen in Bezug auf eine Mittellängsebene spiegelsymmetrisch angeordnet und ausgebildet sind.

## Claims

1. Cutting element fort the machining of metallic workpieces, in particular of wheel sets, having an upper and a lower face of which at least one, preferably both, are designed as rake faces, and having a side face (11) that that connects the upper and the lower face and that is respectively perpendicular thereto, that, together with the rake face, forms cutting edges usable for machining, that possess longer linear cutting edge sections (20) that are disposed respectively parallel to each other and short linear cutting edge sections (21) that are lying respectively parallel to each other as well as cutting corners (22) that connect respectively adjacent longer and short cutting edge sections,
**characterized in that**
at least one part (18) of the longer linear partial edge sections is lowered by a measure (a) in relation to the adjacent edge sections (23) as well as indented by a measure (b).

2. Cutting element according to claim 1, **characterized in that** in relation to the total height (H) and the total width (B) of the cutting element, the measure (a) of the lowering in 0.01 x H to 0.2 x H, preferably 0.02 x H to 0.1 x H, and the measure (b) of the indentation is 0.005 x B to 0.1 x B, preferably 0.008 x B to 0.05 x B.

3. Cutting element according to claim 1, **characterized in that** the indented and lowered part (18) of the cutting edge section (20) is disposed in parallel - apart from transition areas (24) - to adjacent cutting edge sections (23).

4. Cutting element according to claim 1 or 3, **characterized in that** ascending flank sections (24) abut on the indented and lowered cutting edge sections (18) as translation area, respectively in an angle of 10° to 90°, preferably of 40° to 50° and/or that the cutting edge corners have a corner radius (R) of 0.05 x B to 0.5 x B, preferably of 0.1 x B to 0.4 x B, wherein B is the total width of the cutting element.

5. Cutting element according to one of the claims 1 to 4, **characterized by** a center plateau (25) that is embossed on the rake face in relation to the planes defined by the cutting edges and disposed in a distance to the cutting edges, the centre plateau (25) preferably has projections (26), the longitudinal center axis of which points in direction of a cutting corner (22) or of a short and/or longer cutting edge section (20, 21).

6. Cutting element according to claim 6 or 7, **characterized in that** the center plateau (25) merges into the rake face areas that are adjacent to and surround this center plateau via descending flanks (29) and/or **characterized by** rib-shaped elevations (32) that are disposed in symmetry to a bisecting line of the cutting corners in the rake face or lying in its direction, the height of which is minor than the height of the center plateau (25) and that reach on the one hand to the descending flanks (29) of the center plateau (25), on the other hand however ending in front of the cutting edge (20, 21, 22).

7. Cutting element according to one of the claims 5 or 6, **characterized in that** further projections (30, 31) originate from the center plateau (25), that point in direction of the longer cutting edge section (20) and/or are of a minor height than the center plateau (25), whereby preferably the further projections (30, 31) merge via descending flanks into the adjacent surrounding rake face areas and/or are designed crowned.

8. Cutting element according to one of the claims 1 to 7, **characterized in that** the short cutting edge section (21) is recessed centrally at a part (34) and merges via ascending flanks (35) into the adjacent cutting edge sections and/or that in a distance to the cutting edge chip-breaking hutches (33) are provided on the rake face, that are designed in a sickle-shape preferably between two adjacent rib-shaped elevations (32).

9. Cutting element according to one of the claims 1 to 8, **charaterized in that** chip-breaking elements (37, 38) are provided in a distance to the cutting edge that are trapezoid in the cross section and have a height that increases as the distance to the cutting edge increases, that preferably reaches to the center plateau (25).

10. Cutting element according to one of the claim 1 to 9, **characterized in that** the rake face are designed such that they have reflection symmetry in relation to a longitudinal center axis and/or a transverse center axis and/or a diagonal and/or that the opposite rake faces are disposed and designed such that they have reflection symmetry in relation to a center longitudinal plane.

## Revendications

1. Insert de coupe destiné à l'usinage par enlèvement de copeaux de pièces métalliques, en particulier d'essieux montés, avec une face supérieure et une face inférieure dont une au moins, de préférence toutes les deux sont réalisées en tant que faces de coupe, ainsi qu'avec une face latérale (11) qui relie les faces supérieure et inférieure et est située respectivement perpendiculairement à ceci et qui, conjointement avec ladite face de coupe, forme des tranchants utilisables pour l'enlèvement de copeaux, qui possèdent des portions de tranchant linéaires plus longues (20) disposées respectivement parallèlement entre elles et des portions de tranchant linéaires courtes (21) situées respectivement parallèlement entre elles ainsi que des coins de coupe respectivement adjacents (22) reliant des portions de tranchant plus longues et des portions de tranchant courtes,
**caractérisé par le fait**
**qu**'au moins une zone partielle (18) des portions de tranchant linéaires plus longues est abaissée d'une mesure (a) et rentrée d'une mesure (b) par rapport aux portions de tranchant contiguës (23).

2. Insert de coupe selon la revendication 1, **caractérisé par le fait que**, par rapport à la hauteur totale (H) et à la largeur totale (B) de l'insert de coupe, la mesure (a) de l'abaissement est comprise entre 0,01 x H et 0,2 x H, de préférence entre 0,02 x H et 0,1 x H, et la mesure (b) de l'enfoncement est comprise entre 0,005 x B et 0,1 x B, de préférence entre 0,008 x B et 0,05 x B.

3. Insert de coupe selon la revendication 1, **caractérisé par le fait que** la zone partielle rentrée et abaissée (18) de la portion de tranchant (20) - abstraction faite de zones de transition (24) - est disposée parallèlement à des portions de tranchant voisines (23).

4. Insert de coupe selon la revendication 1 ou 3, **caractérisé par le fait qu**'à la suite des portions de tranchant rentrées et abaissées (18) sont situées, en tant que zone de transition, des portions de flanc (24) montant respectivement à un angle compris entre 10° et 90°, de préférence entre 40° et 50°, et/ou que les coins de tranchant présentent un rayon de coin (R) compris entre 0,05 x B et 0,5 x B, de préférence entre 0,1 x B et 0,4 x B, B étant la largeur totale de l'insert de coupe.

5. Insert de coupe selon l'une des revendications 1 à 4, **caractérisé par** un plateau central (25) disposé sur la face de coupe, qui est élevé par rapport aux plans définis par les tranchants et disposé à distance des tranchants et qui, de préférence, présente des projections (26) dont l'axe médian longitudinal montre en direction d'un coin de coupe (22) ou d'une portion de tranchant courte et/ou plus longue (20, 21).

6. Insert de coupe selon la revendication 5, **caractérisé par le fait que** la transition entre ledit plateau central (25) et les zones de face de coupe situées autour de celui-ci se fait par des flancs descendants (29), et/ou **caractérisé par** des élévations en forme de nervures (32) qui sont disposées dans la face de coupe de manière à être situées symétriquement par rapport à une bissectrice de coin de coupe ou dans la direction de celle-ci, et dont la hauteur est inférieure à la hauteur du plateau central (25) et qui s'étendent jusqu'aux flancs descendants (29) du plateau central (25) d'un côté, mais se terminent devant le tranchant (20, 21, 22) de l'autre côté.

7. Insert de coupe selon l'une des revendications 5 ou 6, **caractérisé par le fait que** d'autres projections (30, 31) s'étendent depuis ledit plateau central (25), qui sont dirigées vers les portions de tranchant plus longues (20) et/ou présentent une hauteur inférieure à celle du plateau central (25), de préférence la transition entre lesdites autres projections (30, 31) et les zones de face de coupe situées autour de celles-ci se faisant par des flancs descendants et/ou lesdites autres projections étant réalisées de manière à être bombées.

8. Insert de coupe selon l'une des revendications 1 à 7, **caractérisé par le fait que** la portion courte de tranchant (21) est abaissée au centre sur une zone partielle (34) et passe par des flancs montants (35) dans les portions de tranchant voisines, et/ou que, à distance du tranchant, de préférence entre deux élévations voisines en forme de nervure (32), des creux à former le copeau (33) en forme de croissant sont prévus sur la face de coupe.

9. Insert de coupe selon l'une des revendications 1 à 8, **caractérisé par le fait que** des éléments à former le copeau (37, 38) trapézoïdaux en coupe transversale et présentant une hauteur qui augmente avec une distance croissante du tranchant sont prévus à distance du tranchant et s'étendent de préférence jusqu'au plateau central (25).

10. Insert de coupe selon l'une des revendications 1 à 9, **caractérisé par le fait que** les faces de coupe sont réalisées à symétrie spéculaire par rapport à un axe médian longitudinal et/ou à un axe médian transversal et/ou à une diagonale, et/ou que les faces de coupe opposées sont disposées et réalisées à symétrie spéculaire par rapport à un plan longitudinal médian.
